# EUROPEAN PATENT APPLICATION

(11) **EP 0 832 555 A2**
(43) Date of publication of application: **01.04.1998**
(21) Application number: 97115397.8
(22) Date of filing: 05.09.1997
(51) Int. Cl.: A01G 3/053

(54) **Motorized hedge trimmer**

(30) Priority: 27.09.1996 IT VI960152
(71) Applicant: VALEX S.P.A., 36015 Schio (Vicenza) (IT)
(72) Inventor: Spillere, Antonio, 36030 - Villaverla (Vicenza) (IT)
(74) Representative: Forattini, Amelia

(57) **Abstract**

A motorized hedge trimmer which includes a blade assembly (2) formed by two elongated blades (2', 2'') which face each other longitudinally and are provided with teeth, an electric motor (3) which is accommodated in a protective casing (4) provided with two handles (7, 8) for the user's hands, motion transmission devices (11-19) for connecting the motor (3) to the blades (2, 2''), imparting a reciprocating motion thereto. The transmission devices include at least one toothed elastic driving belt (15, 18), particularly two reduction pairs with respective elastic toothed belts (15, 18). The reduction pairs have transmission ratios between 2:1 and 5:1. There is a two-handed control mechanism which is essentially located in the upper part of the casing (4) above the motor (3).

## Description

The present invention relates to a motorized hedge trimmer for gardening, particularly for cutting branches, hedges and foliage.

Conventional power hedge trimmers of the above type are generally formed by two elongated blades which face each other and are provided with cutting teeth which are directed outward and with an electric motor for moving the blades. The motor is generally accommodated in a protective casing provided with two handles for the user's hands.

Drives connect the motor to an eccentric pivot or a similar mechanism which is suitable to convert the rotary motion of the motor into a reciprocating motion of the blades. The blades cut the plants by tangential interaction of their sharp edges.

The drive can be of the kind with gears, with one or more reduction stages in order to considerably decrease the rotation rate and increase the torque transmitted by the motor.

A drawback of these drives is constituted by the risk of breakage caused by stress peaks caused by the jamming of the blades on excessively tough objects.

In order to solve this drawback, it is possible to use much stronger gears with a considerably higher pitch in order to withstand the overloads, consequently increasing bulk and costs.

However, in order to considerably reduce the risk of breakage of the drive it is necessary to interpose between the drive and the motor a flexible coupling of the clutch type, which allows some slippage of the drive even when the blades are blocked.

As an alternative, it is possible to use a drive which uses an elastic toothed belt which has, with respect to conventional drives with metal gears, the advantages of lower noise and less vibration, no lubrication, higher machining and assembly tolerances and electrical insulation.

Italian utility model application No. PD91U000016, in the name of this same Applicant, discloses a motorized hedge trimmer with a toothed-belt drive with a single reduction stage and with a flexible coupling constituted by elastic rings which are interposed between facing contact surfaces.

This prior art hedge trimmer offers all the advantages of the elastic-belt drive, but has a considerable structural complexity which increases assembly costs and therefore the cost of the device as a whole. The belt drive with a single reduction stage also does not ensure an adequate reduction, which would be useful to increase the torque in the case of high-performance machines.

It is known that international safety standards require the motor to be operated by virtue of two-handed control mechanisms, that is to say, by virtue of two separate lever devices fitted on the respective handles of the casing. The first device acts on a microswitch for the supply of electric power of the motor; the second device is adapted to place the microswitch so that it faces an abutment surface of the first lever device. In this manner, in order to start the motor it is necessary to simultaneously press the two levers and it is therefore necessary to hold the device with both hands, increasing safety conditions during use.

One of the problems of conventional hedge trimmers is that the second lever mechanism is arranged at a certain distance from the first one and in a symmetrical position with respect to the motor, requiring the use of complicated drive mechanisms which increase the difficulty and cost of assembly.

An aim of the present invention is to improve a motorized hedge trimmer of the type defined in the introduction, so as to reduce machining and assembly costs while increasing the performance of the device.

An object of the invention is to provide a drive which is more elastic and safe, with a higher reduction ratio and with a higher torque applied to the blades for an equal power rating of the motor used.

A further object is to increase the tolerances of the couplings in the drive and to eliminate complicated and expensive flexible couplings so as to reduce machining and assembly costs.

This aim, these objects and others which will become apparent hereinafter are achieved by a motorized hedge trimmer, which includes two elongated blades which face each other in a longitudinal direction and are provided with cutting teeth, an electric motor which is accommodated in a protective casing, motion transmission devices for connecting the motor to the blades, making them perform a reciprocating motion, wherein the transmission devices include at least one elastic toothed driving belt, characterized in that the transmission devices include at least two reduction stages with respective elastic toothed belts and with driving pulleys which are rigidly keyed on the respective axes.

In this manner one obtains a higher torque and a more elastic and safer drive and it is possible to eliminate the complicated and expensive flexible couplings of the prior art. This considerably simplifies the coupling tolerances in the drive and correspondingly reduces assembly costs.

For a better comprehension of the invention, the motorized hedge trimmer is now described in greater detail with reference to a preferred but not exclusive embodiment, illustrated only by way of non-limitative example in the accompanying drawings, wherein:

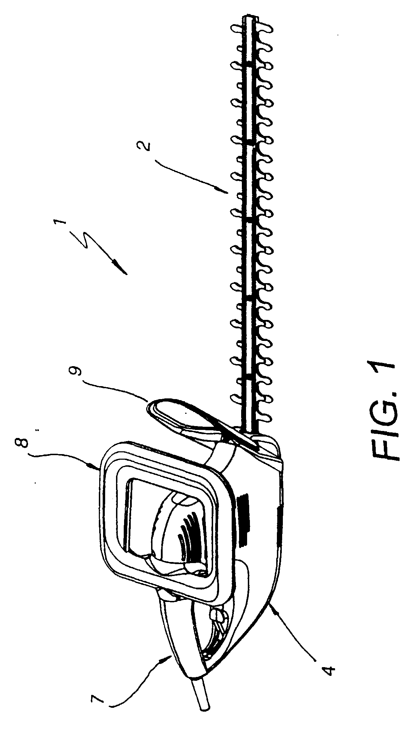

Fig. 1 is a general perspective view of a hedge trimmer according to the invention;

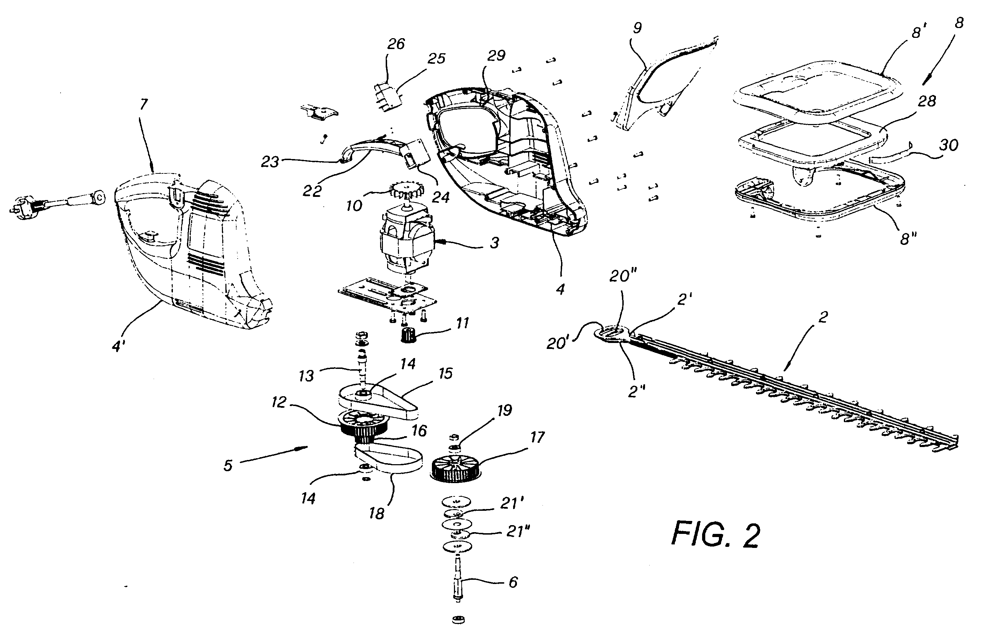

Fig. 2 is an exploded view of the hedge trimmer of Fig. 1;

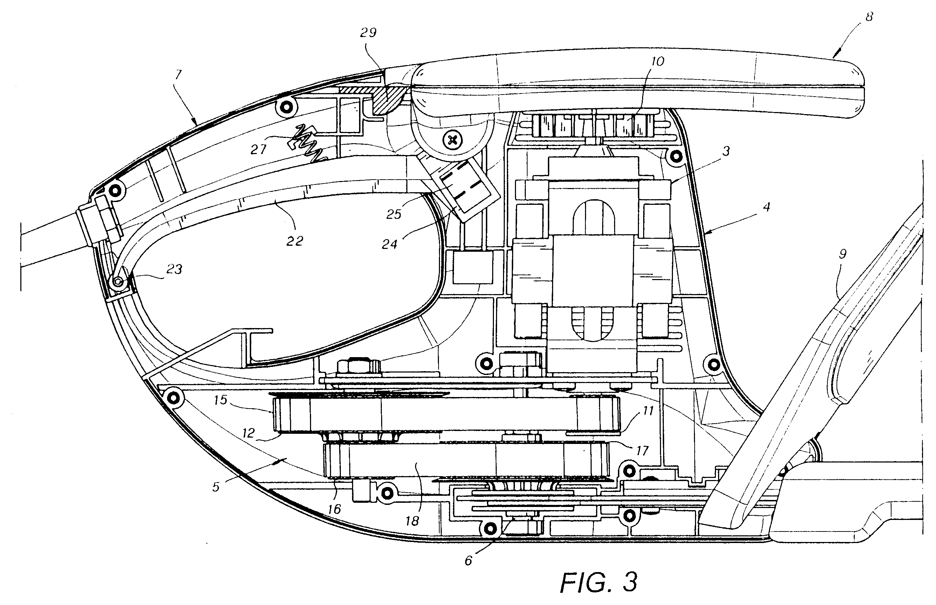

Fig. 3 is a sectional view of a detail of the hedge trimmer of Fig. 1, taken along a longitudinal vertical plane;

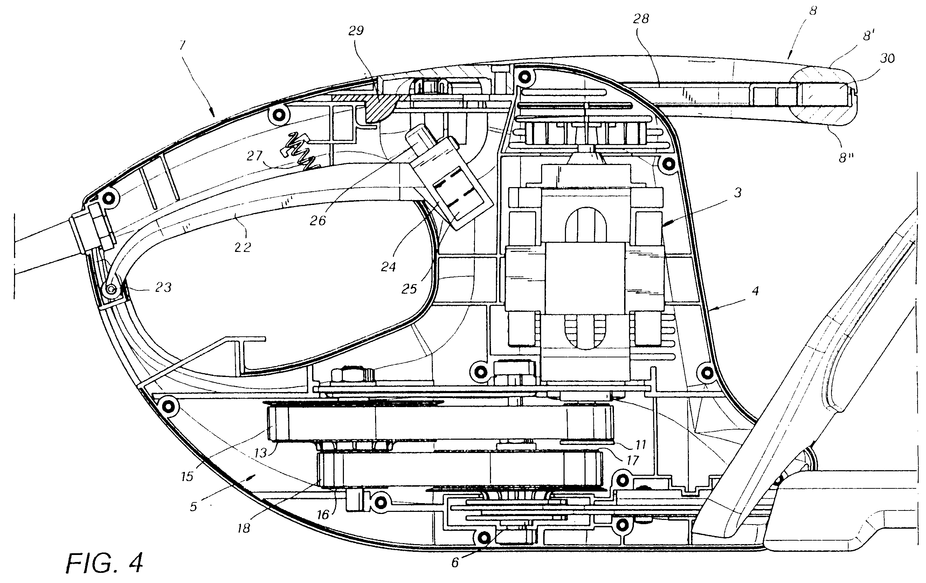

Fig. 4 is a view of the detail of Fig. 3, with some parts eliminated for the sake of greater clarity and in a first step of operation;
Fig. 5 is a view of the detail of Fig. 4 in a second step of operation;
Fig. 6 is a view of the detail of Fig. 4 in a third step of operation.

With reference to the above figures, a motorized hedge trimmer, according to the invention, and generally designated by the reference numeral 1, comprises a blade assembly 2, a motor 3, which is arranged in a casing 4 formed by two half-shells 4' and 4'', and a drive 5. At the output of drive 5 an actuation shaft with eccentrics 6 can be coupled to blade assembly 2.

Blade assembly 2 is of the conventional type and is formed by two elongated blades 2', 2'' which are substantially. mutually identical and provided with teeth which protrude transversely outward. The blades are retained by elongated plates in order to allow their mutual longitudinal sliding.

Casing 4 has two handles 7 and 8 and a protective guard for the hand of the user 9; the guard, too, is of the conventional type.

Motor 3 is an electric motor, for example an AC motor provided with a cooling fan 10.

According to the invention, drive 5 is a belt drive, more particularly a belt drive with two reduction stages or pairs.

The first pair includes a toothed driving pulley 11 which is keyed on the shaft of motor 3, a first driven toothed pulley 12 which is fitted on a secondary shaft 13 which is mounted on bearings or bushings 14 rigidly coupled to casing 4, and a first elastic toothed driving belt 15. The transmission ratio of this first pair is approximately 4:1.

The second pair includes a second toothed driving pulley 16, which is rigidly fitted on secondary shaft 13 and is connected to a second driven toothed pulley 17 by means of a second toothed belt 18 which is similar to the first one and is keyed on a final secondary shaft 6 which is mounted on bushings or bearings 19 which are in turn rigidly coupled to casing 4. The transmission ratio of this second pair is approximately 2.1:1.

On the whole, the total reduction ratio is approximately 8.2:1 and this allows to considerably reduce the rotation rate of the final driving shaft 6 and to correspondingly increase the value of the torque that acts on blades 2', 2''.

Blades 2', 2'' have slotted holes 20', 20'' in which respective eccentrics 21', 21'' keyed on shaft 6 engage.

There is a two-handed control mechanism for the actuation motor 3, the structure of which is located essentially in the upper part of the casing, above the motor, so as to avoid the complicated transmission mechanisms of the prior art.

The control mechanism includes a first shaped lever 22 which is pivoted, by means of one end 23, to the rear handle 7 and has, at the opposite end, a seat 24 for accommodating a microswitch 25 with a moving button 26. Lever 22 is normally forced downward by a spring 27 which is retained by casing 4 and contrasts pressure applied by the hand of a user.

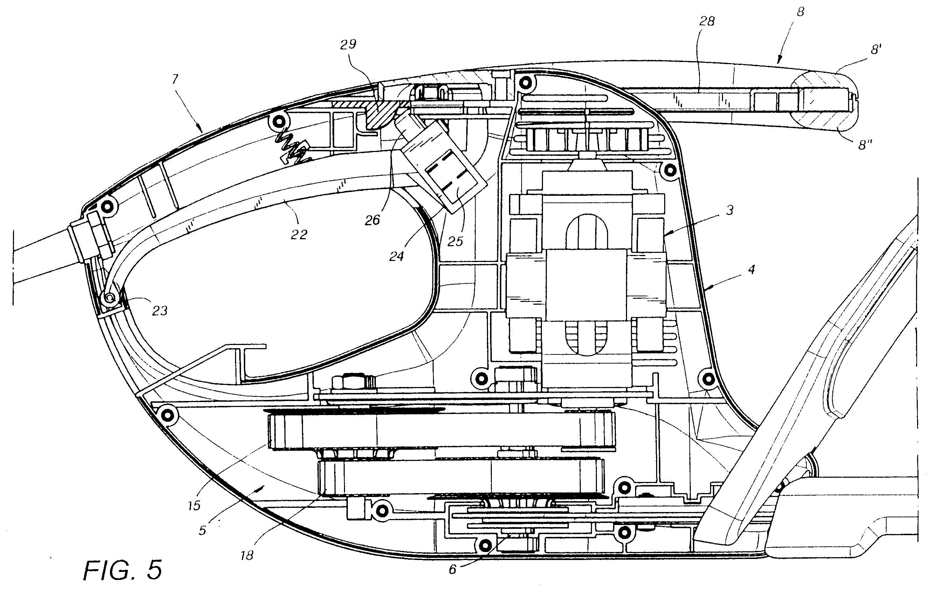

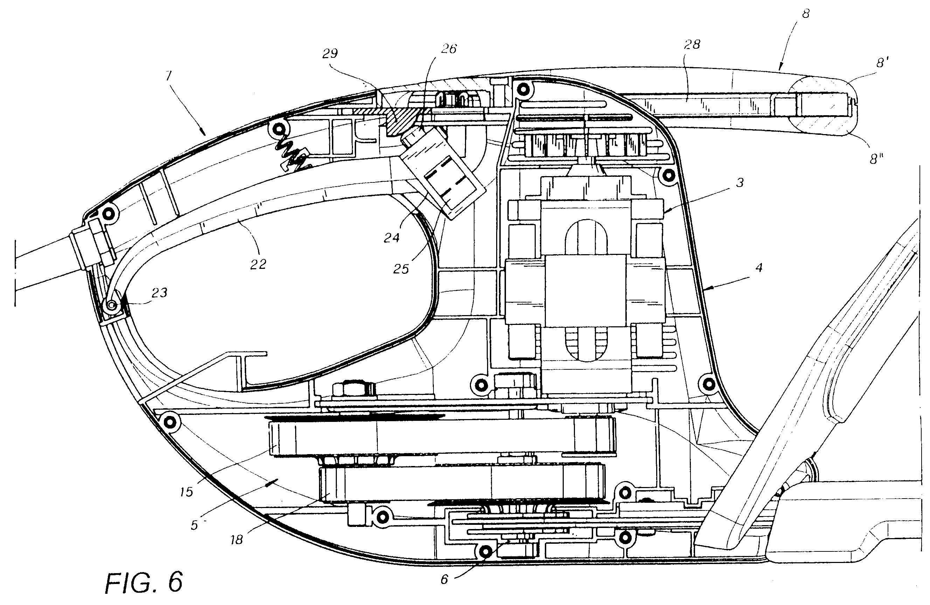

The control mechanism also includes a second lever, which is essentially constituted by the handle 8 formed by two half-shells 8', 8'' whose plan shape is approximately rectangular; the half-shells are mutually joined, and a trigger 28 is slidingly inserted between them. The trigger also is generally square or rectangular and interacts with a cam 29. Cam 29 is kept in a normally retracted position by the trigger, which is pushed by a spring 30, so that cam 29 is not aligned with button 26 of switch 25 and therefore the switch cannot be operated, as shown in Fig. 5. Trigger 28 can be shifted forward with a pressure of the user's hand, so that cam 29 is aligned with button 26 of switch 25, as shown in Fig. 6.

During use, the user uses one hand to grip handle 7 and press lever 22 and the other hand to push trigger 28 forward.

From the above description it is evident that the hedge trimmer according to the invention achieves all of the intended aim and objects, and in particular attention is drawn to its elastic drive, with a high reduction ratio, without clutch slip devices, and with high coupling tolerances by virtue of the adoption of two elastic driving belts which can compensate for large plays.

The hedge trimmer according to the invention is susceptible of numerous modifications and variations, all of which are within the scope of the inventive concept expressed in the accompanying claims. All the details may be replaced with other technically equivalent ones, all of which are understood to be equally protected.

## Claims

1. Motorized hedge trimmer, comprising a blade assembly (2) formed by two elongated blades (2', 2'') which face each other longitudinally and are provided with teeth, an electric motor (3) which is accommodated in a protective casing (4) provided with two handles (7, 8) for the user's hands, motion transmission devices (11-19) for connecting said motor (3) to said blades (2, 2''), imparting a reciprocating motion thereto, wherein said transmission devices comprise at least one toothed elastic driving belt (15, 18), characterized in that said transmission devices comprise at least two reduction pairs with respective elastic toothed belts (15, 18).

2. Hedge trimmer according to claim 1, characterized in that said reduction pairs have transmission ratios between 2:1 and 5:1.

3. Hedge trimmer according to claim 1, characterized in that it comprises a two-handed control mechanism which is essentially located in the upper part of the casing (4) above said motor (3).

4. Hedge trimmer according to claim 3, characterized in that said two-handed control mechanism comprises a first shaped lever (22) which is pivoted to one of said handles (7) and a movable trigger (28) which is inserted in the second one of said handles (8).

5. Hedge trimmer according to claim 4, characterized in that said shaped lever (22) has a seat (24) for accommodating a microswitch (25) provided with an actuation button (26).

6. Hedge trimmer according to claim 5, characterized in that it comprises an abutment cam (29) for said button (26), said movable trigger (28) acting on said cam.

7. Hedge trimmer according to claim 6, characterized in that said trigger (28) can move between a retracted position, in which said cam (29) is not aligned with said button (26), and an extracted position, in which said cam (29) is aligned with said button (26) to allow its actuation.
